# EUROPEAN PATENT SPECIFICATION

(11) **EP 3 518 482 B1**
(45) Date of publication and mention of the grant of the patent: **03.03.2021**
(21) Application number: 17852157.1
(22) Date of filing: 23.05.2017
(51) Int. Cl.: H04L 27/26, H04B 17/13, H04B 17/17, H04W 52/42, H04W 52/52, H04B 1/00, H04B 17/10, H04B 17/11, H04W 52/36, H04W 52/24

(54) **POWER CALIBRATION METHOD, APPARATUS AND COMPUTER READABLE STORAGE MEDIUM**
LEISTUNGSKALIBRIERVERFAHREN, VORRICHTUNG UND COMPUTERLESBARES SPEICHERMEDIUM
PROCÉDÉ D'ÉTALONNAGE DE PUISSANCE, APPAREIL ET SUPPORT DE STOCKAGE LISIBLE PAR ORDINATEUR

(30) Priority: 22.09.2016 CN 201610843417
(43) Date of publication of application: 31.07.2019
(73) Proprietor: Sanechips Technology Co., Ltd., Shenzhen, Guangdong 518055 (CN)
(72) Inventor: HUANG, Zhen, Shenzhen Guangdong 518055 (CN)
(74) Representative: D'Halleweyn, Nele Veerle Trees Gertrudis
(86) International application number: PCT/CN2017/085568
(87) International publication number: WO 2018/054083

(56) References cited:
- EP-A1- 2 512 192
- CN-A- 1 798 122
- CN-A- 101 170 331
- CN-A- 103 262 618
- US-A1- 2001 006 888
- US-B2- 8 744 009

## Description

### Technical Field

The present invention relates to the field of wireless communication technology, and particularly, to a power calibration method, apparatus, and a computer readable storage medium.

### Background

Power calibration refers to that a power value of a transmission link in a wireless communication system is adjusted to make a transmission power value of a base station system reach a predetermined background reference value. With development of the whole wireless transceiver system, an accuracy requirement on the power calibration is higher and higher, and the power calibration needs to be compatible with more and more system standards, that is, higher requirements on a calibration compatibility of the whole system are put forward.

At present, the power calibration implemented through single-mode multi-carrier power detection and adjustment mainly aims at a single network standard. Software is adopted for initiating, hardware is adopted for calculating and reporting, and then a total power is used for calibration. Poor control of initialization operation and adjustment accuracy in the method in a large total calibration error and a low calibration accuracy. Moreover, for the implementation and application in multi-mode system, the single-mode multi-carrier power detection and adjustment can be carried out only for each network standard to implement the power calibration, thus, the calibration efficiency is low for the power calibration in the multi-mode system.

Document US 2001/006888 A1 discloses a multi-carrier transmitter, which has combination means for receiving and combing a plurality of carriers including a first modulated carrier for transmission in a first channel and a second modulated carrier for transmission in a second channel, to create a multi-carrier signal. Power control means are arranged to individually vary the power of each of the plurality of carriers before combination.

### Summary

In view of that, embodiments of the present invention desire to provide a power calibration method according to claim 1, apparatus according to claim 6, and computer readable storage medium according to claim 11. Further improvements and embodiments are provided in the dependent claims.

### Brief Description of Drawings

FIG. 1 is a flowchart of a power calibration method.
FIG. 2 is an alternative flowchart of a power calibration method according to an embodiment of the present invention.
FIG. 3 is an alternative flow diagram of a power calibration method according to an embodiment of the present invention.
FIG. 4 is an alternative flow diagram of a synchronous signal according to an embodiment of the present invention.
FIG. 5 is an alternative timing diagram of a synchronous signal according to an embodiment of the present invention.
FIG. 6 is a structural diagram of a power calibration apparatus.

### Detailed Description

The technical scheme in the embodiments of the present invention will be described clearly and completely below in combination with the accompanying drawings in the embodiments of the present invention.

An embodiment of the present invention provides a power calibration method, which is suitable for at least one network standard, that is, the method may be used in a single-mode multi-carrier system or a multi-mode multi-carrier system. Herein, the network standard may include one or more of the following: a Global System for Mobile Communication (GSM), a Universal

Mobile Telecommunications System (UMTS), a Long Term Evolution (LTE), a Time Division-Synchronous Code Division Multiple Access (TD-SCDMA), a Code Division Multiple Access (CDMA). Herein, the LTE may include a Time Division Duplex (TDD), and a Frequency Division Duplex (FDD).

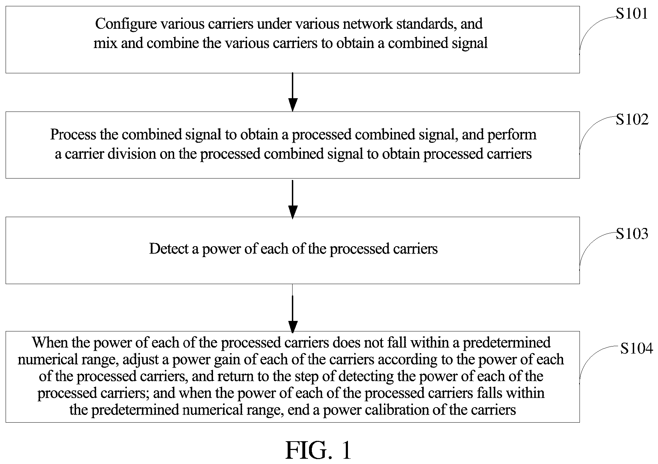

FIG. 1 is a flowchart of a power calibration method. As shown in FIG. 1, the method includes S101-S104.

In S101, various carriers under various network standards are configured, and the various carriers are mixed and combined to obtain a combined signal.

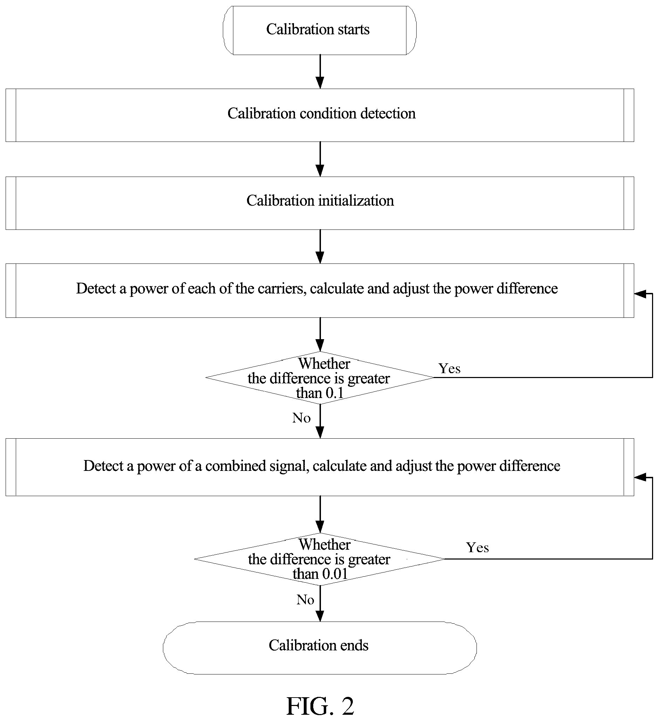

Fig. 2 is an alternative flowchart of a power calibration method according to an embodiment of the present invention. Description will be made below by taking FIG. 2.

As shown in FIG. 2, in a first step, a power calibration apparatus receives a calibration enable signal, and when the calibration enable signal is valid, the power calibration apparatus starts a calibration. Specifically, the power calibration apparatus mainly detects whether various indexes of an amplifier (PA) in the single-mode or multi-mode system meet requirements, whether various modules in a Radio Remote Unit (RRU) are ready, PA standing waves, etc. In a second step, the power calibration apparatus performs a calibration initialization. Specifically, due to the uncertain of settings of various radio frequency parameters in the power calibration apparatus, an initialization operation is required and calibration initialization information is generated. Here, in the calibration initialization process, an initial value of a power gain of each of the carriers under various network standards is set to 0, to prevent a large power after the PA is forcibly turned on in the process of processing each carrier.

The power calibration apparatus obtains calibration initialization information after performing calibration initialization. The power calibration apparatus configures various carriers under various network standards according to the calibration initialization information. It should be noted here that the power calibration apparatus may configure multiple carriers under one network standard according to the calibration initialization information, and may also configure multiple carriers under multiple network standards according to the calibration initialization information.

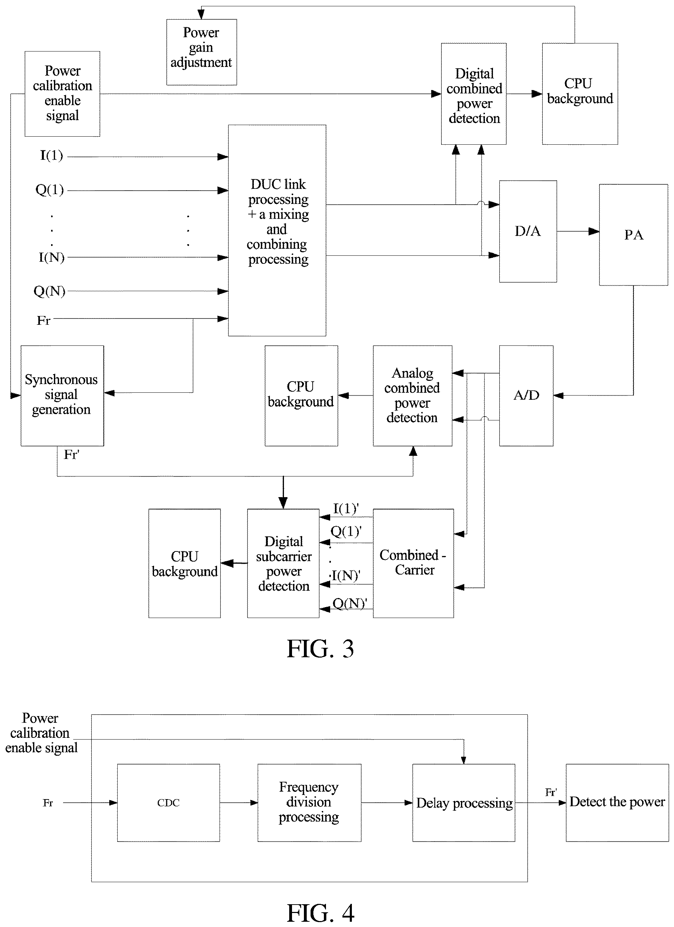

Fig. 3 is an alternative flow diagram of a power calibration method in an embodiment of the present invention. The description will be made below with reference to FIGs. 2 and 3.

As shown in FIG. 3, the power calibration apparatus configures N carriers, and the first carrier is represented by I(1) and Q(1), and the Nth carrier is represented by I(N) and Q(N). The power calibration apparatus transmits the N carriers in parallel, and performs a Digital Down Converter (DUC) processing and a mixing and combining processing on the N carriers. Here, the power calibration apparatus may perform the mixing and combining processing on carriers under each network standard to obtain a combined signal under each network standard, and may also perform the mixing and combining processing on all carriers to obtain a combined signal. Here, the embodiment of the present invention is not specifically limited.

In S102, the combined signal is processed to obtain a processed combined signal, and a carrier division is performed on the processed combined signal to obtain processed carriers.

Still taking FIG. 3 as an example, after obtaining the combined signal, the power calibration apparatus sequentially performs a digital-to-analog (D/A) conversion, a PA processing and an analog-to-digital (A/D) conversion processing on the combined signal to obtain the processed combined signal, and performs a carrier division on the processed combined signal. In FIG. 3, the first processed carrier is represented by 1(1)', Q(1)', and the Nth processed carrier is represented by I(N)', Q(N)'.

Here, it should be noted that the power gain of each of the carriers in the embodiment of the present invention refers to the power gain on the link of the processed combined signal obtained by performing the mixing and combining processing on the configured carriers. The link may also be referred to as a transmission link.

In SI03, a power of each of the processed carriers is detected.

For example, in FIG. 3, after obtaining the first processed carrier to the Nth processed carrier, the power calibration apparatus detects the power of each of the processed carriers (equivalent to digital subcarrier power detection in FIG. 3), and reports the detected power of each carrier to a Central Processing Unit (CPU) background in the power calibration apparatus.

In S104, when the power of each of the processed carriers does not fall within a predetermined numerical range, a power gain of each of the carriers is adjusted according to the power of each of the processed carriers, and it is to return to the step of detecting the power of each of the processed carriers; and when the power of each of the processed carriers falls within the predetermined numerical range, a power calibration of the carriers ends.

Herein, the predetermined numerical range is pre-configured by the power calibration apparatus according to a calibration requirement. Only when the power of each carrier falls within the predetermined numerical range, which means the transmission power on the transmission link reaches the calibration requirement, then the calibration of each carrier ends. Otherwise, it needs to return to the step of detecting the power of each of the processed carriers again, and the power gain of each of the carriers is adjusted again according to the power of each of the processed carrier until the power of each of the processed carrier falls within a predetermined numerical range. In such way the transmission power of the transmission power on the transmission link meets the calibration requirements. The method has a good configurability and a high compatibility. And the method can be compatible with the power calibration requirements of multi-mode or mixed-mode under various network standards, and users can flexibly perform the configuration according to the calibration requirements in different application scenarios.

To achieve the power calibration requirements better, it is necessary to adjust the power gain of each of the carriers. First, the power calibration apparatus coarsely adjusts the power gain of each of the carriers. In an alternative embodiment, in S104, the power gain of each of the carriers is adjusted according to the power of each of the processed carriers, which may include: a difference between the power of each of the processed carriers and a predetermined value of each carrier is determined as the power difference of each carrier; and according to the power difference of each carrier, a corresponding first adjustment value is determined, the power gain of each of the carriers is adjusted according to the determined first adjustment value.

Specifically, in FIG. 3, after the CPU background in the power calibration apparatus receives the reported power of each of the processed carriers, firstly, a difference between the power of each of the processed carriers and a predetermined value of each carrier is calculated to obtain a power difference of each carrier. After that, a first difference corresponding to the power difference of each carrier is determined. For example, when the power difference of each carrier is greater than 0.1mW, the determined first difference may be 0.1dB. Then the power gain of each of the carriers is increased or decreased by 0.1dB. After that, the power of each of the processed carriers is detected, and the power gain of each of the carriers is adjusted according to the detected power of each carrier. In such way the power gain of each of the carriers is coarsely adjusted until the adjusted power gain of each of the carriers meets a predetermined condition.

The power calibration apparatus coarsely adjusts the power gain of each of the carriers according to the power of each of the processed carriers. To improve the power calibration accuracy, the power gain of each of the carriers needs to be finely adjusted to improve the power calibration accuracy. In an embodiment, after S101, the method further includes : the power of the combined signal is detected.

In S102, after the combined signal is processed to obtain the processed combined signal, and before the carrier division is performed on the processed combined signal to obtain the processed carriers, the method further includes: a power of the processed combined signal is detected; and when the adjusted power gain of each of the carriers meets a predetermined condition, the power gain of each of the carriers is adjusted according to the power of the combined signal and the power of the processed combined signal.

According to the power of the combined signal and the power of the processed combined signal, the power gain of each of the carriers is adjusted when the adjusted power gain of each of the carriers meets a predetermined condition, that is, fine adjustment is performed on the basis that the coarse adjustment meets the predetermined condition. The predetermined condition may be a coarse adjustment value interval, and fine adjustment can be performed only when the power difference of each carrier after coarse adjustment falls into the coarse adjustment value interval, which means that the coarse adjustment meets the predetermined condition. After one fine adjustment is performed, the fine adjustment ends only when the detected power difference of the combined signal and the power difference of the processed combined signal meet a certain fine adjustment value interval.

In the specific implementation process, to further improve the power calibration accuracy through the fine adjustment, in an alternative embodiment, adjusting the power gain of each of the carriers according to the power of the combined signal and the power of the processed combined signal may include: a difference between the power of the combined signal and a predetermined value of the combined signal is determined as a power difference of the combined signal; a difference between the power of the processed combined signal and a predetermined value of the processed combined signal is determined as a power difference of the processed combined signal; a corresponding second adjustment value is determined according to the power difference of the combined signal and the power difference of the processed combined signal, and the power gain of each of the carriers is adjusted according to the determined second adjustment value.

Herein the second adjustment value is less than the first adjustment value.

Similarly, taking FIG. 2 and FIG. 3, the power calibration apparatus mixes and combines the configured carriers to obtain a combined signal after calibration initialization is completed, then processes the combined signal to obtain a processed combined signal, performs a carrier division on the processed combined signal to obtain the processed carriers, next detects the power of each carrier, calculates the difference between the power of each carrier and a predetermined value of each carrier. When the power difference of each carrier is greater than 0.1mW, the power gain of each of the carriers is increased or decreased by 0.1dB and the power gain of each of the carriers is continuously adjusted coarsely until the detected power difference of each carrier is less than or equal to 0.1mW. Then according to the detected combined signal (equivalent to the digital combined power detection in FIG. 3) and the processed combined signal (equivalent to the analog combined power detection in FIG. 3), the power gain of each of the carriers is finely adjusted. As shown in FIG. 2, a difference between a predetermined value of the combined signal and the combined signal is calculated, and a difference between a predetermined value of the processed combined signal and the processed combined signal is calculated. Only when the power difference of the combined signal and the power difference of the processed combined signal are both greater than 0.01mW, the power gain of each of the carriers is increased or decreased by 0.01dB, and the fine adjustment of the power gain of each of the carriers is continued until the power difference of the detected combined signal and the power difference of the processed combined signal is less than or equal to 0.01mW, then the calibration ends.

Here, coarse adjustment and fine adjustment are adopted. The carrier signal is corrected first through the coarse adjustment, and then the combined signal is finely corrected through the fine adjustment. Therefore, the actual detection and adjustment of the power calibration has higher flexibility and accuracy. Two groups of detection and adjustment, i.e., a subcarrier (feedback Received Signal Strength Indicator (RSSI) of a carrier)-combined carrier (feedback RSSI of the combined carrier), and a digital combined carrier (Transmitter Signal Strength Indicator, TSSI)-analog combined carrier (feedback RSSI), are adopted. A plurality of two groups of detection and adjustment can be achieved. Through a method of two kinds of adjustment and correction, a purpose of calibrating both the carrier power value and the link output power value is achieved.

Coarse adjustment and fine adjustment are respectively performed for adjusting the power gain of each of the carriers. The power of each of the processed carriers needs to be detected in the coarse adjustment, and in the fine adjustment the power of the processed combined signal besides the power of the combined signal needs to be detected. So, to timely and accurately trigger to detect the power of each of the processed carriers and the power of the processed combined signal, a synchronous signal triggering to detect the power of each of the processed carriers and the power of the processed combined signal needs to be determined. In an alternative embodiment, after S103, the method may include: according to a power calibration enable signal, a synchronous processing is performed on a detection signal for detecting the power of each of the processed carriers to obtain a synchronous signal; and correspondingly, it is to trigger to detect the power of each of the processed carriers according to the synchronous signal; and according to the synchronous signal, it is to trigger to detect the power of the processed combined signal.

To obtain an accurate synchronous signal to trigger to detect the power of each of the processed carriers and the power of the processed combined signal, in an alternative embodiment, according to the power calibration enable signal, performing the synchronous processing on the detection signal for detecting the power of each of the processed carriers to obtain the synchronous signal may include: when the power calibration enable signal is valid, a cross-clock domain processing, a frequency division processing and a delay processing are performed sequentially on a detection signal for detecting the power of each of processed carriers to obtain the synchronous signal.

Fig. 4 is an alternative flow diagram of a synchronous signal according to an embodiment of the present invention. As shown in FIG. 4, the power calibration apparatus receives a power calibration enable signal, herein after the power calibration apparatus receives the enable signal, the enable signal is used for starting the calibration when the enable signal is valid, and the power calibration apparatus performs a calibration detection, a calibration initialization, etc. Herein, the detection signal for detecting the power of the combined signal is represented by Fr. The power calibration apparatus firstly performs a cross-clock processing on the detection signal Fr to unify a clock domain on the transmission link and a clock domain on the feedback link, to prevent abnormalities of the hardware circuit in the power calibration apparatus. To ensure the compatibility, the feedback link refers to a processing link of channel data obtained after the data of transmission link are processed through the PA and the feedback A/D conversion. The feedback link combination and the subcarrier power detection can be completed through various levels of processings of the link.

Frequency division processing is mainly aimed at the frequency division processing of various network standards to ensure that synchronous signals sent to the next stage for power detection may adapt to the processing of different standards. After the frequency division processing is completed, a delay processing is performed. The delay processing needs to perform different delay adjustments according to different network standards and mixed mode conditions. The adjustment values come from a delay from downlink data to the feedback. Since the combined signal is subjected to a D/A processing, a PA processing, an A/D processing and a carrier division processing after the power of the combined signal is detected, delay processing is required at this time to detect accurate power of each of the processed carriers and accurate power of the processed combined signal. In such way, the synchronous signal Fr' is obtained to trigger to detect the power of each of the processed carrier and the power of the processed combined signal.

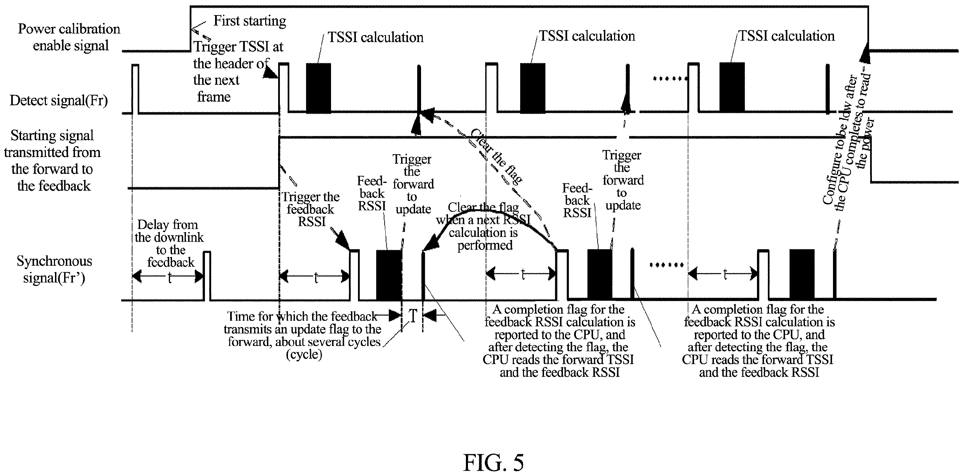

Fig. 5 is an alternative timing chart of the synchronous signal in the embodiment of the present invention. As shown in FIG. 5, the CPU background configures a power calibration enable signal. When the enable signal is at a high level, and the detection of the power of the combined signal is triggered at the header of the associated synchronization frame of the detection signal Fr to obtain the power of the combined signal represented by TSSI, and as shown in FIG. 5, the TSSI is calculated, updated and reported to the register. Then the detection signal Fr is subjected to the cross-clock processing, the frequency division processing and the delay processing to obtain the synchronous signal Fr'.

It should be noted here that in FIG. 2, the detection signal is not only used to generate the synchronous signal Fr', but also used to trigger the mixing and combining processing on various carriers to obtain a combined signal, so that the power calibration apparatus can continuously detect and adjust the power gain of each of the carriers.

In addition, to ensure that the downlink and feedback power detections are in the same frame during continuous multiple power detections, in FIG. 5, the power calibration apparatus generates not only a synchronous signal Fr' but also a starting signal transmitted from the forward to the feedback according to the power calibration enable signal and the detection signal Fr. When the starting signal transmitted from the forward to the feedback is at a high level, the power of each of the processed carriers and the power of the processed combined signal are detected after the delay processing t. The detected power of each of the processed carriers and the detected power of the processed combined signal are represented by RSSI, which is represented by feedback RSSI in FIG. 5. After RSSI is obtained, it is to trigger the forward to update and report a TSSI completion flag to a register. After about several cycles, the RSSI completion flag is updated and reported to the register, and the completion flag of calculating feedback RSSI at the next associated synchronization frame header of the detection signal Fr is reported to the CPU. The CPU reads TSSI and RSSI after detecting the flag, and clears the TSSI and RSSI in the register after the delay processing t.

Through the above coarse adjustment and fine adjustment, the calibration accuracy of power calibration can be improved, and in the generation of synchronous signals, information such as link and system delay is not considered in a common scheme, so when synchronization processing is not performed, the detection values of the three units, i.e., the digital subcarrier power detection, digital combined power detection and analog combined power detection have a large deviation. After reporting to the background, a deviation between the new calibration parameters, configured by the software after calibration calculation, and adjustment values required by the actual link is large. In this scheme, synchronous signals are added to make the error between the three detection values be very small, especially in the digital and analog combined carrier power detection unit, a handshake mechanism is added to make a detection error between the two be smaller, which is of key significance to the whole calibration accuracy.

The power calibration method provided by the embodiment of the invention is suitable for at least one network standard. The power calibration apparatus configures various carriers under various network standards, mixes and combines the various carriers to obtain a combined signal, then processes the combined signal to obtain a processed combined signal, and performs a carrier division on the processed combined signal to obtain processed carriers, and next detects the processed carriers to obtain a power of each of the processed carriers. When the power of each of the processed carriers does not fall within the predetermined value range, the power calibration apparatus adjusts a power gain of each of the carriers according to the power of each of the processed carriers, and returns to the step of detecting each of the processed carriers to obtain the power of each of the processed carriers. When the power of each of the processed carriers falls within the predetermined value range, the power calibration of each carrier ends. Thus, a power adjustment path with a closed-loop feedback is formed through adjusting the power gain of each of the carriers according to the power of each of the processed carriers, and through adjusting the power by adjusting the power gain, thereby improving the power calibration efficiency and the power calibration efficiency in single-mode and multi-mode systems.

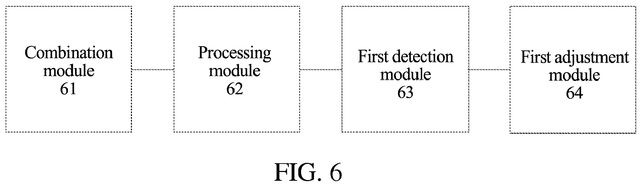

Based on the same inventive concept, an embodiment of the present invention further provides a power calibration apparatus. FIG. 6 is a structural diagram of the power calibration apparatus.

As shown in FIG. 6, the apparatus is suitable for at least one network standard. The apparatus includes a combination module 61, a processing module 62, a first detection module 63 and a first adjustment module 64.

Herein, the combination module 61 is configured to configure various carriers under various network standards, and mix and combine the various carriers to obtain a combined signal. The processing module 62 is configured to process the combined signal to obtain a processed combined signal, and perform a carrier division on the processed combined signal to obtain processed carriers. The first detection module 63 is configured to detect a power of each of the processed carriers. The first adjustment module 64 is configured to, when the power of each of the processed carriers does not fall within a predetermined numerical range, adjust a power gain of each of the carriers according to the power of each of the processed carriers, and trigger the first detection module 63 to detect the power of each of the processed carriers; and when the power of each of the processed carriers falls within the predetermined numerical range, end power calibration of the carriers.

To achieve the calibration requirement better, it is necessary to adjust the power gain of each of the carriers. First, the power calibration apparatus coarsely adjusts the power gain of each of the carriers. The first adjustment module 64 is specifically configured to determine a difference between the power of each of the processed carriers and a predetermined value of each carrier as the power difference of each carrier; and according to the power difference of each carrier, determine a corresponding first adjustment value; and adjust the power gain of each of the carriers according to the determined first adjustment value.

The power calibration apparatus coarsely adjusts the power gain of each of the carriers according to the power of each of the processed carriers. To improve the power calibration accuracy, the power gain of each of the carriers needs to be finely adjusted to improve the power calibration accuracy. In an embodiment, the apparatus further includes: a second detection module configured to detect the power of the combined signal after configuring various carriers under various network standards, and mixing and combining the various carriers to obtain the combined signal; a third detection module configured to detect the power of the processed combined signal after processing the combined signal to obtain the processed combined signal, and before performing the carrier division on the processed combined signal to obtain processed carriers. The second adjustment module is configured to adjust the power gain of each of the carriers according to the power of the combined signal and the power of the processed combined signal when the adjusted power gain of each of the carriers meets a predetermined condition.

In the specific implementation process, to further improve the power calibration accuracy through fine adjustment, in an alternative embodiment, the second adjustment module is specifically configured to determine the difference between the power of the combined signal and the predetermined value of the combined signal as the power difference of the combined signal; determine the difference between the power of the processed combined signal and the predetermined value of the processed combined signal as the power difference of the processed combined signal; according to the power difference of the combined signal and the processed combined signal, determine a corresponding second adjustment value, and adjust the power gain of each of the carriers again according to the determined second adjustment value.

Coarse adjustment and fine adjustment are respectively performed for adjusting the power gain of each of the carriers. The power of each of the processed carriers needs to be detected in the coarse adjustment, and in the fine adjustment the power of the processed combined signal besides the power of the combined signal needs to be detected. So, to timely and accurately trigger to detect the power of each of the processed carriers and the power of the processed combined signal, a synchronous signal triggering to detect the power of each of the processed carriers and the power of the processed combined signal needs to be determined. In an alternative embodiment, the above apparatus further includes: a synchronization module configured to, after detecting the power of each of the processed carriers, according to a power calibration enable signal, a synchronous processing is performed on a detection signal for detecting the power of each of the processed carriers to obtain a synchronous signal; and a trigger module configured to trigger to detect the power of each of the processed carriers according to the synchronous signal; and according to the synchronous signal, trigger to detect the power of the processed combined signal.

To obtain an accurate synchronous signal to trigger to detect the power of each of the processed carriers and the power of the processed combined signal, in an alternative embodiment, the synchronization module is specifically configured to perform a cross-clock domain processing, a frequency division processing and a delay processing sequentially on a detection signal for detecting the power of each of processed carriers to obtain the synchronous signal when the power calibration enable signal is valid.

In practical applications, the combination module 61, the processing module 62, the first detection module 63, the first adjustment module 64, the second detection module, the third detection module, the second adjustment module, the synchronization module and the trigger module may all be implemented by a CPU, a microprocessor (MPU), an application specific integrated circuit (ASIC), or Field-Programmable Gate Array (FPGA), or the like located in the apparatus.

Based on this, the power calibration apparatus provided by the embodiment of the invention includes a processor and a storage configured to store a computer program capable of running on the processor.

Herein the processor is configured to execute the steps of the method of the embodiments of the present invention when running the computer program.

The embodiment describes a computer readable storage medium, which may be a Read Only Memory (ROM) (e.g., a read only memory, a FLASH memory, a transfer device, etc.), a magnetic storage medium (e.g., a magnetic tape, a magnetic disk drive, etc.), an optical storage medium (e.g., a CD-ROM, a DVD-ROM, a paper card, a paper tape, etc.) and other well-known types of program memories. Computer-executable instructions are stored in the computer-readable medium. When executed, the computer-executable instructions cause at least one processor to perform operations including:
configuring various carriers under various network standards, mixing and combining the various carriers to obtain a combined signal; processing the combined signal to obtain a processed combined signal, and performing a carrier division on the processed combined signal to obtain processed carriers; detecting a power of each of the processed carriers; when the power of each of the processed carriers does not fall within a predetermined numerical range, adjusting a power gain of each of the carriers according to the power of each of the processed carriers, and returning to the step of detecting the power of each of the processed carriers; when the power of each of the processed carriers falls within the predetermined numerical range, ending power calibration of the carriers.

The power calibration apparatus provided by the embodiment of the invention is suitable for at least one network standard. The power calibration apparatus configures various carriers under various network standards, mixes and combines the various carriers to obtain a combined signal, then processes the combined signal to obtain a processed combined signal, and performs a carrier division on the processed combined signal to obtain processed carriers, and next detects the processed carriers to obtain a power of each of the processed carriers. When the power of each of the processed carriers does not fall within the predetermined value range, the power calibration apparatus adjusts a power gain of each of the carriers according to the power of each of the processed carriers, and returns to the step of detecting each of the processed carriers to obtain the power of each of the processed carriers. When the power of each of the processed carriers falls within the predetermined value range, the power calibration of each carrier ends. Thus, a power adjustment path with a closed-loop feedback is formed through adjusting the power gain of each of the carriers according to the power of each of the processed carriers, and through adjusting the power by adjusting the power gain, thereby improving the power calibration efficiency and the power calibration efficiency in single-mode and multi-mode systems.

It should be pointed out here that the description of the above apparatus embodiment is similar to that of the above method, and has the same beneficial effects as the method embodiment, therefore it is not repeated here. For technical details not disclosed in the embodiments of the apparatus of the present invention, those skilled in the art should refer to the description of the embodiments of the method of the present invention to understand them. To save the space, description will be made repeatedly here.

It should be understood that "one embodiment" or "an embodiment" involved throughout the specification means that a particular feature, structure, or characteristic related to the embodiment is included in at least one embodiment of the present invention. Therefore, "in one embodiment" or "in an embodiment" throughout the specification does not necessarily refer to the same embodiment. In addition, these specific features, structures, or characteristics may be combined in one or more embodiments in any suitable manner. It should be understood that in various embodiments of the present invention, the sequence numbers of the above-mentioned processes does not mean the order of execution, and the order of execution of each process should be determined by the function and internal logic of each process. The sequence numbers of the above-mentioned processes should not constitute any limitation on the implementation process of the embodiments of the present invention. The sequence numbers of the above-mentioned embodiments of the present invention are only for description, while not representing the pros and cons of the embodiments.

It should be noted that in this document, the terms "comprise", "include", or any other variations thereof are intended to cover a non-exclusive inclusion, such that a process, method, article, or apparatus that includes a list of elements not only includes those elements but also includes other elements not expressly listed, or includes elements inherent to the process, method, article, or apparatus. Without further restrictions, an element defined by a statement "include a/an..." does not exclude the presence of another identical element(s) in the process, method, article, or apparatus that includes the element.

In the embodiments provided by the present application, it should be understood that the disclosed apparatuses and methods may be implemented through other manners. The apparatus embodiments described above are just exemplary. For example, division of units is just division according to logic functions, and other division methods may be adopted during actual implementation. For example, a plurality of units or components may be combined or integrated in another system, or some features may be ignored or are not implemented. In addition, mutual coupling or direct coupling or communication connection illustrated or discussed above may be indirect coupling or communication connection through some interfaces, devices or units, and can be in electrical, mechanical or other forms.

The unit described as a separate part may or may not be physically separated, and the component shown as a unit may or may not be a physical unit, and the component shown as a unit may be located in one place or may be allocated over multiple network units. Partial or all of the unit therein may be selected according to the actual needs to realize the purposes of the schemes of the embodiments.

In addition, various function units in various embodiments of the present invention may be all integrated in one processing unit, and each unit may also be respectively and separately used as a unit, and two or more than two units may also be integrated in one unit. The integrated units not only may be implemented by means of hardware, but also may be implemented by means of hardware plus software function units.

One ordinary skilled in the art can understand that all or partial steps in the above-mentioned method embodiments may be completed by relevant hardware instructed through a program. The program may be stored in a computer readable storage medium, and when the program is executed, the steps of the above-mentioned method embodiments are executed. The storage medium includes various media which can store program codes, such as a portable storage device, a Read-Only Memory (ROM), a magnetic disk or a compact disk.

Alternatively, when the integrated unit described in the present invention is implemented in the form of a software function module and is sold or used as a separate product, the integrated unit may also be stored in a computer-readable storage medium. Based on this understanding, the technical scheme in the embodiments of the present invention, in essence, or the part contributing to the existing art, may be embodied in the form of a software product stored in a storage medium, including several instructions for causing a computer device (which may be a personal computer, a server, or a network device, etc.) to perform all or part of the methods described in various embodiments of the present invention. The aforementioned storage medium includes various media capable of storing program codes, such as a portable storage device, a Read-Only Memory (ROM), a magnetic disk or a compact disk.

That is, a computer program is stored on the computer readable storage medium provided by the embodiments of the present invention. When executed by a processor, the computer program implements the steps of the method of the embodiments of the present invention.

The foregoing is only specific embodiments of the present invention, but the scope of protection of the present invention is not limited thereto. Therefore, the protection scope of the present invention shall be subjected to the protection scope defined by the claims.

### Industrial Applicability

According to the scheme provided by the embodiments of the present invention, various carriers under various network standards are configured, the various carriers are mixed and combined to obtain a combined signal, then the combined signal is processed by sequentially performing a digital-to-analog, D/A, conversion, a Power Amplifier, PA, processing and an analog-to-digital, A/D, conversion on the combined signal to obtain a processed combined signal, a carrier division is performed on the processed combined signal to obtain processed carriers, and next the processed carriers are detected to obtain a power of each of the processed carriers. When the power of each of the processed carriers does not fall within a predetermined numerical range, according to the power of each of the processed carriers, the power gain of each of the carriers is adjusted, and it is to return to the step of detecting the processed carriers to obtain the power of each of the processed carriers; and when the power of each of the processed carriers falls within a predetermined numerical range adjusting the power gain of each of the carriers again according to the power of the combined signal and the power of the processed combined signal and ending the power calibration of the carriers.

Thus, a power adjustment path with a closed-loop feedback is formed through adjusting the power gain of each of the carriers according to the power of each of the processed carriers, and through adjusting the power by adjusting the power gain, thereby improving the power calibration efficiency and the power calibration efficiency in single-mode and multi-mode systems.

## Claims

1. A method for power calibration, comprising:
configuring various carriers under various network standards, mixing and combining the various carriers to obtain a combined signal (S101);
detecting a power of the combined signal;
sequentially performing a digital-to-analog, D/A, conversion processing, a Power Amplifier, PA, processing and an analog-to-digital, A/D, conversion processing on the combined signal to obtain a processed combined signal (S102;
detecting a power of the processed combined signal;
performing a carrier division on the processed combined signal to obtain processed carriers (S102);
detecting a power of each of the processed carriers (S103);
when the power of each of the processed carriers does not fall within a predetermined numerical range, adjusting a power gain of each of the carriers according to the power of each of the processed carriers, and returning to re-detect the power of each of the processed carriers (S104);
and when the power of each of the processed carriers falls within the predetermined numerical range, adjusting the power gain of each of the carriers again according to the power of the combined signal and the power of the processed combined signal; ending power calibration of the carriers.

2. The method according to claim 1, wherein the adjusting a power gain of each of the carriers according to the power of each of the processed carriers (S104) comprises:
determining a difference between the power of each of the processed carriers and a predetermined value of each carrier as a power difference of each carrier;
determining a corresponding first adjustment value according to the power difference of each carrier, and adjusting the power gain of each of the carriers according to the determined first adjustment value.

3. The method according to claim 1, wherein the adjusting the power gain of each of the carriers again according to the power of the combined signal and the power of the processed combined signal comprises:
determining a difference between the power of the combined signal and a predetermined value of the combined signal as a power difference of the combined signal;
determining a difference between the power of the processed combined signal and a predetermined value of the processed combined signal as a power difference of the processed combined signal;
determining a corresponding second adjustment value according to the power difference of the combined signal and the power difference of the processed combined signal, and adjusting the power gain of each of the carriers again according to the determined second adjustment value.

4. The method according to claim 1, wherein, after the detecting the power of each of the processed carriers, the method further comprises:
according to a power calibration enable signal, performing a synchronous processing on a detection signal for detecting the power of each of the processed carriers to obtain a synchronous signal;
correspondingly, triggering to detect the power of each of the processed carriers according to the synchronous signal;
according to the synchronous signal, triggering to detect the power of the processed combined signal.

5. The method according to claim 4, wherein according to the power calibration enable signal, performing the synchronous processing on the detection signal for detecting the power of each of the processed carriers to obtain the synchronous signal comprises:
when the power calibration enable signal is valid, performing a cross-clock domain processing, a frequency division processing and a delay processing sequentially on the detection signal for detecting the power of each of processed carriers to obtain the synchronous signal.

6. An apparatus for power calibration, **characterized by** comprising:
a combination module (61) configured to configure various carriers under various network standards, mix and combine the various carriers to obtain a combined signal;
a processing module (62) configured to sequentially perform a digital-to-analog, D/A, conversion processing, a Power Amplifier, PA, processing and an analog-to-digital, A/D, conversion processing on the combined signal to obtain a processed combined signal, and perform a carrier division on the processed combined signal to obtain processed carriers;
a first detection module (63) configured to detect a power of each of the processed carriers;
a second detection module configured to detect a power of the combined signal after configuring various carriers under various network standards, and mixing and combining the various carriers to obtain the combined signal;
a third detection module configured to detect a power of the processed combined signal after processing the combined signal to obtain the processed combined signal and before performing the carrier division on the processed combined signal to obtain the processed carriers;
a first adjustment module (64) configured to, when the power of each of the processed carriers does not fall within a predetermined numerical range, adjust a power gain of each of the carriers according to the power of each of the processed carriers, and trigger the first detection module to re-detect the power of each of the processed carriers; and
a second adjustment module configured to, when the power of each of the processed carriers falls within the predetermined numerical range, adjust the power gain of each of the carriers again according to the power of the combined signal and the power of the processed combined signal; end power calibration of the carriers.

7. The apparatus according to claim 6, wherein the first adjustment module (64) is configured to determine a difference between the power of each of the processed carriers and a predetermined value of each carrier as a power difference of each carrier; and determine a corresponding first adjustment value according to the power difference of each carrier, and adjust the power gain of each of the carriers according to the determined first adjustment value.

8. The apparatus according to claim 6, wherein the second adjustment module is configured to determine a difference between the power of the combined signal and a predetermined value of the combined signal as a power difference of the combined signal; determine a difference between the power of the processed combined signal and a predetermined value of the processed combined signal as a power difference of the processed combined signal; determine a corresponding second adjustment value according to the power difference of the combined signal and the power difference of the processed combined signal, and adjust the power gain of each of the carriers again according to the determined second adjustment value.

9. The apparatus according to claim 6, wherein, the apparatus further comprises:
a synchronization module configured to, after detecting the power of each of the processed carriers, according to a power calibration enable signal, perform a synchronous processing on a detection signal for detecting the power of each of the processed carriers to obtain a synchronous signal;
a trigger module configured to trigger the first detection module (63) to detect the power of each of the processed carriers according to the synchronous signal; and trigger the third detection module to detect the power of the processed combined signal according to the synchronous signal.

10. The apparatus according to claim 9, wherein the synchronization module is configured to perform a cross-clock domain processing, a frequency division processing and a delay processing sequentially on the detection signal for detecting the power of each of the processed carriers to obtain the synchronous signal when the power calibration enable signal is valid.

11. A computer readable storage medium where a computer program is stored, and when executed by a processor, the computer program implementing the steps of the method according to any one of claims 1 to 5.

## Patentansprüche

1. Verfahren zur Leistungskalibrierung, wobei das Verfahren Folgendes umfasst:
Konfigurieren verschiedener Träger unter verschiedenen Netzwerkstandards, Mischen und Kombinieren der verschiedenen Träger, um ein kombiniertes Signal zu erhalten (S101);
Erfassen einer Leistung des kombinierten Signals;
nacheinander Durchführen einer Digital-Analog (D/A) -Umwandlungsverarbeitung, einer Leistungsverstärker (PA) -Verarbeitung und einer Analog-Digital (A/D) - Umwandlungsverarbeitung an dem kombinierten Signal, um ein verarbeitetes kombiniertes Signal zu erhalten (S102);
Erfassen einer Leistung des verarbeiteten kombinierten Signals;
Durchführen einer Trägerteilung an dem verarbeiteten kombinierten Signal, um verarbeitete Träger zu erhalten (S102);
Erfassen einer Leistung jedes der verarbeiteten Träger (S103);
wenn die Leistung jedes der verarbeiteten Träger nicht in einen vorbestimmten numerischen Bereich fällt, Einstellen einer Leistungsverstärkung jedes der Träger entsprechend der Leistung jedes der verarbeiteten Träger, und Zurückkehren zur erneuten Erfassung der Leistung jedes der verarbeiteten Träger (S104);
und wenn die Leistung jedes der verarbeiteten Träger in den vorbestimmten numerischen Bereich fällt, erneutes Einstellen der Leistungsverstärkung jedes der Träger gemäß der Leistung des kombinierten Signals und der Leistung des verarbeiteten kombinierten Signals; und Beenden der Leistungskalibrierung der Träger.

2. Verfahren nach Anspruch 1, wobei das Einstellen einer Leistungsverstärkung jedes der Träger gemäß der Leistung jedes der verarbeiteten Träger (S104) Folgendes umfasst:
Bestimmen einer Differenz zwischen der Leistung jedes der verarbeiteten Träger und einem vorbestimmten Wert jedes Trägers als Leistungsdifferenz jedes Trägers;
Bestimmen eines entsprechenden ersten Einstellwerts gemäß der Leistungsdifferenz jedes Trägers und Einstellen der Leistungsverstärkung jedes der Träger gemäß dem bestimmten ersten Einstellwert.

3. Verfahren nach Anspruch 1, wobei das erneute Einstellen der Leistungsverstärkung jedes der Träger gemäß der Leistung jedes des kombinierten Signals und der Leistung des verarbeiteten kombinierten Signals Folgendes umfasst:
Bestimmen einer Differenz zwischen der Leistung des kombinierten Signals und einem vorbestimmten Wert des kombinierten Signals als eine Leistungsdifferenz des kombinierten Signals;
Bestimmen einer Differenz zwischen der Leistung des verarbeiteten kombinierten Signals und einem vorbestimmten Wert des verarbeiteten kombinierten Signals als eine Leistungsdifferenz des verarbeiteten kombinierten Signals;
Bestimmen eines entsprechenden zweiten Einstellwerts gemäß der Leistungsdifferenz des kombinierten Signals und der Leistungsdifferenz des verarbeiteten kombinierten Signals, und erneutes Einstellen der Leistungsverstärkung jedes der Träger gemäß dem bestimmten zweiten Einstellwert.

4. Verfahren nach Anspruch 1, wobei nach dem Erfassen der Leistung jedes der verarbeiteten Träger das Verfahren weiterhin Folgendes umfasst:
gemäß einem Leistungskalibrierungsfreigabesignal Durchführen einer synchronen Verarbeitung an einem Erfassungssignal zum Erfassen der Leistung jedes der verarbeiteten Träger, um ein synchrones Signal zu erhalten;
entsprechendes Auslösen einer Erfassung der Leistung jedes der verarbeiteten Träger gemäß dem synchronen Signal;
gemäß dem synchronen Signal Auslösen einer Erfassung der Leistung des verarbeiteten kombinierten Signals.

5. Verfahren nach Anspruch 4, wobei das gemäß einem Leistungskalibrierungsfreigabesignal erfolgende Durchführen einer synchronen Verarbeitung an dem Erfassungssignal zum Erfassen der Leistung jedes der verarbeiteten Träger, um ein synchrones Signal zu erhalten, Folgendes umfasst:
wenn das Leistungskalibrierungsfreigabesignal gültig ist, nacheinander Durchführen einer Kreuztaktdomänenverarbeitung, einer Frequenzteilungsverarbeitung und einer Verzögerungsverarbeitung an dem Erfassungssignal zum Erfassen der Leistung jedes der verarbeiteten Träger, um das synchrone Signal zu erhalten.

6. Vorrichtung zur Leistungskalibrierung, **dadurch gekennzeichnet, dass** die Vorrichtung Folgendes umfasst:
ein Kombinationsmodul (61), das konfiguriert ist zum Konfigurieren verschiedener Träger unter verschiedenen Netzwerkstandards, Mischen und Kombinieren der verschiedenen Träger, um ein kombiniertes Signal zu erhalten;
ein Verarbeitungsmodul (62), das konfiguriert ist zum nacheinander Durchführen einer Digital-Analog (D/A) -Umwandlungsverarbeitung, einer Leistungsverstärker (PA) -Verarbeitung und einer Analog-Digital (A/D) -Umwandlungsverarbeitung an dem kombinierten Signal, um ein verarbeitetes kombiniertes Signal zu erhalten, und zum Durchführen einer Trägerteilung an dem verarbeiteten kombinierten Signal, um verarbeitete Träger zu erhalten;
ein erstes Erfassungsmodul (63), das konfiguriert ist zum Erfassen einer Leistung jedes der verarbeiteten Träger;
ein zweites Erfassungsmodul, das konfiguriert ist zum Erfassen einer Leistung des kombinierten Signals nach dem Konfigurieren verschiedener Träger unter verschiedenen Netzwerkstandards, sowie Mischen und Kombinieren der verschiedenen Träger, um ein kombiniertes Signal zu erhalten;
ein drittes Erfassungsmodul, das konfiguriert ist zum Erfassen einer Leistung des verarbeiteten kombinierten Signals nach der Verarbeitung des kombinierten Signals, um das verarbeitete kombinierte Signal zu erhalten, und vor dem Durchführen der Trägerteilung an dem verarbeiteten kombinierten Signal, um die verarbeiteten Träger zu erhalten;
ein erstes Einstellmodul (64), das konfiguriert ist, wenn die Leistung jedes der verarbeiteten Träger nicht in einen vorbestimmten numerischen Bereich fällt, zum Einstellen einer Leistungsverstärkung jedes der Träger gemäß der Leistung jedes der verarbeiteten Träger, und Auslösen des ersten Erfassungsmoduls zur erneuten Erfassung der Leistung jedes der verarbeiteten Träger; und
ein zweites Einstellmodul, das konfiguriert ist, wenn die Leistung jedes der verarbeiteten Träger in den vorbestimmten numerischen Bereich fällt, zum erneuten Einstellen der Leistungsverstärkung jedes der Träger gemäß der Leistung des kombinierten Signals und der Leistung des verarbeiteten kombinierten Signals; und Beenden der Leistungskalibrierung der Träger.

7. Vorrichtung nach Anspruch 6, wobei das erste Einstellmodul (64) konfiguriert ist zum Bestimmen einer Differenz zwischen der Leistung jedes der verarbeiteten Träger und einem vorbestimmten Wert jedes Trägers als Leistungsdifferenz jedes Trägers; und Bestimmen eines entsprechenden ersten Einstellwerts gemäß der Leistungsdifferenz jedes Trägers und Einstellen der Leistungsverstärkung jedes der Träger gemäß dem bestimmten ersten Einstellwert.

8. Vorrichtung nach Anspruch 6, wobei das zweite Einstellmodul konfiguriert ist zum Bestimmen einer Differenz zwischen der Leistung des kombinierten Signals und einem vorbestimmten Wert des kombinierten Signals als eine Leistungsdifferenz des kombinierten Signals; Bestimmen einer Differenz zwischen der Leistung des verarbeiteten kombinierten Signals und einem vorbestimmten Wert des verarbeiteten kombinierten Signals als eine Leistungsdifferenz des verarbeiteten kombinierten Signals; Bestimmen eines entsprechenden zweiten Einstellwerts gemäß der Leistungsdifferenz des kombinierten Signals und der Leistungsdifferenz des verarbeiteten kombinierten Signals, und erneuten Einstellen der Leistungsverstärkung jedes der Träger gemäß dem bestimmten zweiten Einstellwert.

9. Vorrichtung nach Anspruch 6, wobei die Vorrichtung weiterhin Folgendes umfasst:
ein Synchronisationsmodul, das dazu konfiguriert ist, nach dem Erfassen der Leistung jedes der verarbeiteten Träger, gemäß einem Leistungskalibrierungsfreigabesignal eine synchrone Verarbeitung an einem Erfassungssignal zum Erfassen der Leistung jedes der verarbeiteten Träger durchzuführen, um ein synchrones Signal zu erhalten;
ein Auslösemodul, das dazu konfiguriert ist, das erste Erfassungsmodul (63) auszulösen, um die Leistung jedes der verarbeiteten Träger gemäß dem synchronen Signal zu erfassen; und das dritte Erfassungsmodul auslösen, um die Leistung des verarbeiteten kombinierten Signals gemäß dem synchronen Signal zu erfassen.

10. Vorrichtung nach Anspruch 9, wobei das Synchronisationsmodul dazu konfiguriert ist, nacheinander eine Kreuztaktdomänenverarbeitung, eine Frequenzteilungsverarbeitung und eine Verzögerungsverarbeitung an dem Erfassungssignal zum Erfassen der Leistung jedes der verarbeiteten Träger durchzuführen, um das synchrone Signal zu erhalten, wenn das Leistungskalibrierungsfreigabesignal gültig ist.

11. Computerlesbares Speichermedium, in dem ein Computerprogramm gespeichert ist, und wenn es von einem Prozessor ausgeführt wird, das Computerprogramm die Schritte des Verfahrens nach einem der Ansprüche 1 bis 5 umsetzt.

## Revendications

1. Procédé d'étalonnage de puissance, comprenant :
la configuration de diverses porteuses sous diverses normes de réseau, le mélange et la combinaison des diverses porteuses afin d'obtenir un signal combiné (S101) ;
la détection de la puissance du signal combiné ;
la réalisation séquentielle d'un traitement de conversion numérique-analogique (N/A), d'un traitement d'amplificateur de puissance (PA) et d'un traitement de conversion analogique-numérique (A/N) sur le signal combiné afin d'obtenir un signal combiné traité (S102) ;
la détection de la puissance du signal combiné traité ;
la réalisation d'une division de porteuses sur le signal combiné traité afin d'obtenir des porteuses traitées (S102) ;
la détection de la puissance de chacune des porteuses traitées (S103) ;
lorsque la puissance de chacune des porteuses traitées est hors d'une plage numérique prédéterminée, l'ajustage du gain de puissance de chacune des porteuses en fonction de la puissance de chacune des porteuses traitées, et le retour à une redétection de la puissance de chacune des porteuses traitées (S104) ;
et lorsque la puissance de chacune des porteuses traitées est à l'intérieur de la plage numérique prédéterminée, l'ajustage du gain de puissance de chacune des porteuses, de nouveau, en fonction de la puissance du signal combiné et de la puissance du signal combiné traité, et la cessation de l'étalonnage de puissance des porteuses.

2. Procédé selon la revendication 1, dans lequel l'ajustage du gain de puissance de chacune des porteuses en fonction de la puissance de chacune des porteuses traitées (S104) comprend :
la détermination d'une différence entre la puissance de chacune des porteuses traitées et une valeur prédéterminée de chaque porteuse comme différence de puissance de chaque porteuse ;
la détermination d'une première valeur d'ajustage correspondante en fonction de la différence de puissance de chaque porteuse, et l'ajustage du gain de puissance de chacune des porteuses en fonction de la première valeur d'ajustage déterminée.

3. Procédé selon la revendication 1, dans lequel l'ajustage du gain de puissance de chacune des porteuses, de nouveau, en fonction de la puissance du signal combiné et de la puissance du signal combiné traité comprend :
la détermination d'une différence entre la puissance du signal combiné et une valeur prédéterminée du signal combiné comme différence de puissance du signal combiné ;
la détermination d'une différence entre la puissance du signal combiné traité et une valeur prédéterminée du signal combiné traité comme différence de puissance du signal combiné traité ;
la détermination d'une deuxième valeur d'ajustage correspondante en fonction de la différence de puissance du signal combiné et de la différence de puissance du signal combiné traité, et l'ajustage du gain de puissance de chacune des porteuses, de nouveau, en fonction de la deuxième valeur d'ajustage déterminée.

4. Procédé selon la revendication 1, dans lequel, après la détection de la puissance de chacune des porteuses traitées, le procédé comprend en outre :
la réalisation, en fonction d'un signal d'activation d'étalonnage de puissance, d'un traitement synchrone sur un signal de détection visant à détecter la puissance de chacune des porteuses traitées afin d'obtenir un signal synchrone ;
en conséquence, l'enclenchement de la détection de la puissance de chacune des porteuses traitées en fonction du signal synchrone ;
en fonction du signal synchrone, l'enclenchement de la détection de la puissance du signal combiné traité.

5. Procédé selon la revendication 4, dans lequel la réalisation, en fonction du signal d'activation d'étalonnage de puissance, du traitement synchrone sur le signal de détection visant à détecter la puissance de chacune des porteuses traitées afin d'obtenir le signal synchrone comprend :
lorsque le signal d'activation d'étalonnage de puissance est valide, la réalisation séquentielle d'un traitement de croisement de domaines d'horloge, d'un traitement de division de fréquence et d'un traitement de retard sur le signal de détection visant à détecter la puissance de chacune des porteuses traitées afin d'obtenir le signal synchrone.

6. Appareil d'étalonnage de puissance, **caractérisé en ce qu'**il comprend :
un module de combinaison (61) conçu pour configurer diverses porteuses sous diverses normes de réseau, mélanger et combiner les diverses porteuses afin d'obtenir un signal combiné ;
un module de traitement (62) conçu pour réaliser séquentiellement un traitement de conversion numérique-analogique (N/A), un traitement d'amplificateur de puissance (PA) et un traitement de conversion analogique-numérique (A/N) sur le signal combiné afin d'obtenir un signal combiné traité, et pour réaliser une division de porteuses sur le signal combiné traité afin d'obtenir des porteuses traitées ;
un premier module de détection (63) conçu pour détecter la puissance de chacune des porteuses traitées ;
un deuxième module de détection conçu pour détecter la puissance du signal combiné après la configuration de diverses porteuses sous diverses normes de réseau, et le mélange et la combinaison des diverses porteuses visant à obtenir le signal combiné ;
un troisième module de détection conçu pour détecter la puissance du signal combiné traité après le traitement du signal combiné visant à obtenir le signal combiné traité et avant la réalisation de la division de porteuses sur le signal combiné traité visant à obtenir les porteuses traitées ;
un premier module d'ajustage (64) conçu pour, lorsque la puissance de chacune des porteuses traitées est hors d'une plage numérique prédéterminée, ajuster le gain de puissance de chacune des porteuses en fonction de la puissance de chacune des porteuses traitées, et enclencher le premier module de détection pour redétecter la puissance de chacune des porteuses traitées ; et
un deuxième module d'ajustage conçu pour, lorsque la puissance de chacune des porteuses traitées est à l'intérieur de la plage numérique prédéterminée, ajuster le gain de puissance de chacune des porteuses, de nouveau, en fonction de la puissance du signal combiné et de la puissance du signal combiné traité, et cesser l'étalonnage de puissance des porteuses.

7. Appareil selon la revendication 6, dans lequel le premier module d'ajustage (64) est conçu pour déterminer une différence entre la puissance de chacune des porteuses traitées et une valeur prédéterminée de chaque porteuse comme différence de puissance de chaque porteuse, et pour déterminer une première valeur d'ajustage correspondante en fonction de la différence de puissance de chaque porteuse et ajuster le gain de puissance de chacune des porteuses en fonction de la première valeur d'ajustage déterminée.

8. Appareil selon la revendication 6, dans lequel le deuxième module d'ajustage est conçu pour déterminer une différence entre la puissance du signal combiné et une valeur prédéterminée du signal combiné comme différence de puissance du signal combiné, pour déterminer une différence entre la puissance du signal combiné traité et une valeur prédéterminée du signal combiné traité comme différence de puissance du signal combiné traité, pour déterminer une deuxième valeur d'ajustage correspondante en fonction de la différence de puissance du signal combiné et de la différence de puissance du signal combiné traité et pour ajuster le gain de puissance de chacune des porteuses, de nouveau, en fonction de la deuxième valeur d'ajustage déterminée.

9. Appareil selon la revendication 6, comprenant en outre :
un module de synchronisation conçu pour, après la détection de la puissance de chacune des porteuses traitées, réaliser, en fonction d'un signal d'activation d'étalonnage de puissance, un traitement synchrone sur un signal de détection visant à détecter la puissance de chacune des porteuses traitées afin d'obtenir un signal synchrone ;
un module d'enclenchement conçu pour enclencher le premier module de détection (63) pour détecter la puissance de chacune des porteuses traitées en fonction du signal synchrone et pour enclencher le troisième module de détection pour détecter la puissance du signal combiné traité en fonction du signal synchrone.

10. Appareil selon la revendication 9, dans lequel le module de synchronisation est conçu pour réaliser séquentiellement un traitement de croisement de domaines d'horloge, un traitement de division de fréquence et un traitement de retard sur le signal de détection visant à détecter la puissance de chacune des porteuses traitées afin d'obtenir le signal synchrone lorsque le signal d'activation d'étalonnage de puissance est valide.

11. Support d'enregistrement lisible par ordinateur sur lequel est enregistré un programme informatique, et lorsqu'il est exécuté par un processeur, le programme informatique mettant en œuvre les étapes du procédé selon l'une quelconque des revendications 1 à 5.
